# FASCICULE DE BREVET EUROPEEN

(11) **EP 1 454 789 B1**
(45) Date de publication et mention de la délivrance du brevet: **20.09.2006**
(21) Numéro de dépôt: 04290517.4
(22) Date de dépôt: 25.02.2004
(51) Int. Cl.: B60N 2/46, B60N 3/10

(54) **Agencement d'accoudoir avec porte gobelet intégré pour véhicule**
Armlehne mit integriertem Becherhalter für Kraftfahrzeuge
Armrest with integrated cup holder for motor vehicles

(30) Priorité: 03.03.2003 FR 0302526
(43) Date de publication de la demande: 08.09.2004
(73) Titulaire: Renault s.a.s., 92100 Boulogne Billancourt (FR)
(72) Inventeur: Seck, Ibrahima, 94300 Vincennes (FR)

(56) Documents cités:
- JP-A- 3 276 832
- US-A- 3 356 409
- US-A- 3 880 485
- US-A- 5 085 481
- US-A- 5 492 068
- US-A- 5 542 589
- US-A- 5 562 331
- US-A- 6 116 674

## Description

La présente invention se rapporte à un agencement d'accoudoir pour véhicule. Elle concerne en particulier un agencement d'accoudoir présentant une surface repose bras et un porte gobelet intégré.

La demande de brevet JP2001037581 décrit un accoudoir présentant une surface repose bras et un porte gobelet intégré. L'accoudoir est monté à rotation sur une banquette arrière de véhicule entre une position verticale repliée dans le dossier de la banquette et une position horizontale au dessus de l'assise de la banquette, le porte gobelet étant ménagé sur la face supérieure de l'accoudoir dans sa position horizontale présentant aussi la surface repose bras. L'inconvénient d'un tel accoudoir est que le porte gobelet n'est pas utilisable si trois passagers doivent être assis sur la banquette.

US 5 562 331 concerne un compartiment de stockage dont le couvercle de fermeture peut servir d'accoudoir et peut être retourné pour servir de tablette munie d'un porte gobelet.

Le but de l'invention est d'améliorer un tel accoudoir avec porte gobelet.

Par le brevet US 3 356 409, on connaît aussi dans un tout autre domaine une console avec un compartiment réfrigéré pour contenir des aliments. La console est montée coulissante entre les sièges avant de l'habitacle. La console définit le compartiment accessible par un usager à travers un orifice ménagé dans une région supérieure de la console, l'accès au compartiment étant commandé par deux couvercles antagonistes formant accoudoir et montés pivotants à 180 degrés respectivement vers l'avant et l'arrière sur une charnière transversale. Les couvercles peuvent gêner l'accès aux aliments contenus dans le compartiment. Un usager qui poserait un aliment sur un des couvercles ouvert retourné à 180 degrés par rapport à la position de fermeture pourrait heurter cet aliment et le faire tomber dans le compartiment, ce qui est d'autant plus problématique quand l'aliment est une boisson contenue dans un gobelet. De plus, si un usager veut ouvrir un des couvercles, aucun des usagers d'un siège ne peut disposer d'un accoudoir.

L'invention doit proposer un agencement d'accoudoir qui permette d'éviter ce genre d'inconvénient.

Dans ce but, l'invention propose un agencement d'accoudoir pour véhicule, l'accoudoir comportant une surface repose bras et un porte gobelet intégré. La surface repose bras et le porte gobelet de l'accoudoir sont disposés sur des faces substantiellement opposées de l'accoudoir. L'accoudoir est adapté pour pivoter d'une première position dans laquelle la surface repose bras est sur le dessus de l'accoudoir vers une deuxième position dans laquelle le porte gobelet intégré est sur le dessus de l'accoudoir. L'agencement comporte une console définissant un compartiment accessible par un usager à travers une embouchure d'un orifice recouvrable par un organe de fermeture intégré à la console. L'accoudoir est indépendant de l'organe de fermeture et, dans la première position, l'accoudoir est au moins partiellement superposé à l'organe de fermeture.

Dans la deuxième position, l'accoudoir peut être au moins partiellement superposé au moins à l'un de la région supérieure de la console ou de l'organe de fermeture.

Dans la première position, la surface repose bras peut être prévue pour être utilisée par un usager d'un siège avant et dans la deuxième position, le porte gobelet peut prévu pour être utilisé par un usager d'un siège arrière.

La console peut être mobile selon des moyens de guidage entre une position avant et une position arrière du véhicule, le mouvement de la console étant adapté à placer la console de sorte que l'accoudoir soit superposé avec la console. L'accoudoir peut être superposé avec la console au moins quand l'accoudoir est dans la deuxième position.

L'accoudoir peut être monté pivotant sur un siège d'une rangée de siège du véhicule. L'accoudoir peut être monté pivotant sur un siège avant du véhicule. L'accoudoir peut être monté pivotant sur un dossier du siège.

L'accoudoir peut être monté pivotant sur la console.

L'agencement peut comporter un accoudoir en deux bras placés sensiblement l'un à côté de l'autre.

Les deux bras peuvent être montés pivotant indépendamment l'un de l'autre dans leur première ou deuxième position.

Les bras peuvent être montés pivotant selon un axe placé en position sensiblement médiane de la console.

L'accoudoir peut être monté pivotant sensiblement à l'une de ses extrémités. Le porte gobelet peut être placé à une autre extrémité de l'accoudoir. L'accoudoir peut être monté pivotant sensiblement à 180 degrés.

Dans la première position, l'accoudoir peut s'étendre sensiblement vers l'avant du véhicule. Dans la deuxième position, l'accoudoir peut s'étendre sensiblement vers l'arrière du véhicule. L'accoudoir est sensiblement horizontal.

Le porte gobelet peut être défini au moins en partie par un évidement creusé dans l'accoudoir.

L'élément de fermeture peut comprendre un rideau coulissant.

L'invention concerne aussi un véhicule comprenant un agencement comme vu précédemment.

La présente invention va maintenant être décrite par un exemple de réalisation non limitatif, en liaison avec les dessins annexés sur lesquels :
- la figure 1 est vue schématique en deux dimensions d'un agencement d'habitacle de véhicule selon l'invention,
- la figure 2 est vue schématique en trois dimensions d'un tel agencement,
- la figure 3 est un éclaté d'une console de l'agencement selon l'invention.
- la figure 4 est une vue arrière partielle d'une console de l'agencement selon l'invention,
- la figure 5 est une vue avant partielle d'une console de l'agencement selon l'invention,
- la figure 6 est vue schématique en trois dimensions d'une variante d'agencement selon l'invention.

Selon l'invention, comme représenté sur les figures, un véhicule 1 présente un habitacle 2 avec une console 10 à l'arrière d'une planche de bord 7. L'habitacle comporte par exemple deux sièges avant 3 sur une première rangée et deux sièges arrière 5 sur une deuxième rangée. La deuxième rangée peut comporter une banquette.

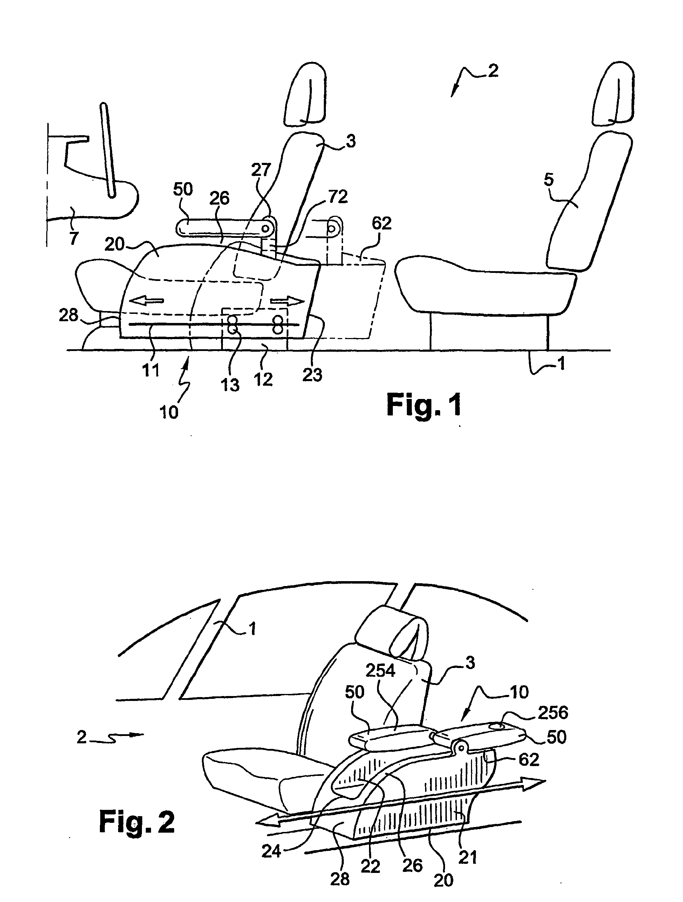

La console 10 est montée coulissante selon des moyens de guidage, entre une position dite avant comme représenté en trait plein à la figure 1 et une position dite arrière, à proximité des sièges arrières, comme représenté en traits mixtes à la figure 1. Les moyens de guidage de la console comportent des moyens mobiles par rapport au véhicule et des moyens fixes par rapport au véhicule. Les moyens de guidage déterminent une trajectoire déterminée de la console 10 dans l'habitacle 2, ici une trajectoire rectiligne d'avant en arrière.

Les moyens de guidage de la console 10 comportent des rails 11 mobiles, internes à la console, solidaires d'un corps 20 de la console et montés coulissants par l'intermédiaire de roulettes 13 sur un chariot 12 fixe par rapport au plancher du véhicule. Les roulettes 13 sont solidaires du chariot 12. Un exemple de réalisation de moyens de guidage en translation d'une console est décrit de façon détaillé dans la demande de brevet EP 1 179 449. En variante non représentée, les rails sont fixes par rapport au plancher et le chariot avec les roulettes est intégré à la console qui roule sur les rails.

La console 10 selon l'invention comporte aussi un mécanisme (non représenté) de verrouillage électrique de rail 11 par rapport au chariot 12, avec un organe de commande de déverrouillage tel qu'un interrupteur à actionner par un utilisateur pour autoriser le coulissement de la console 10.

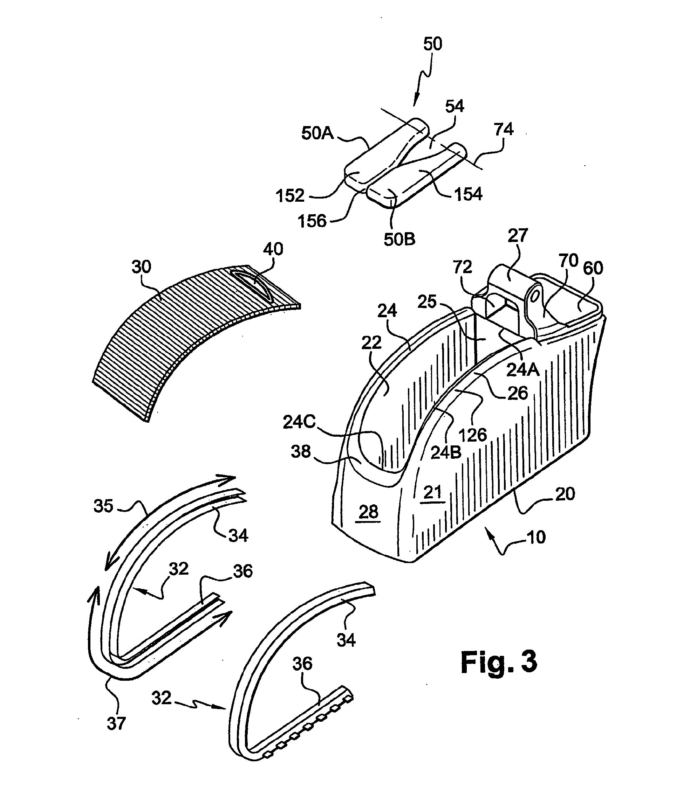

Dans l'exemple représenté, la console 10 comporte deux faces latérales longitudinales 21 sensiblement verticales, une face transversale avant 28 sensiblement verticale dans sa partie inférieure à proximité du plancher du véhicule, une face transversale arrière 23 inclinée de bas en haut vers l'arrière et une face supérieure 26 raccordée au haut des faces latérales et transversales. Le corps 20 présente une paroi interne verticale 25 (figure 3) située aux deux tiers de la longueur de la console 10, vers l'arrière.

Les génératrices de la face supérieure 26 sont, en allant de la face avant 28 vers la paroi interne 25, selon une directrice courbe, le rayon de courbure de la directrice allant croissant. A proximité de la paroi interne 25, la face supérieure 26 est tangente à un plan sensiblement horizontal, par exemple tangente à un plan incliné de quelques degrés vers le bas et vers la face arrière 23. La face supérieure 26 est sensiblement verticale à son raccordement avec la face transversale avant 28. Dans l'exemple représenté, la face supérieure 26 présente un sommet à mi longueur de la console 10. Dans l'exemple représenté, une portion frontale de la face supérieure 26 est la portion de la face supérieure 26 comprise entre la génératrice raccordée à la face avant 28 et une génératrice située à environ au tiers avant de la console 10. De façon générale, la région frontale de la console est une région avant de la console où une embouchure d'un orifice ménagé dans une face de cette région est inclinée vers l'avant, l'orifice ménageant un accès par l'avant. En ménageant l'orifice dans une face d'une région frontale, un utilisateur peut accéder au contenu du compartiment en passant la main dans l'orifice, perpendiculairement à l'embouchure de l'orifice dans la région, selon une direction inclinée, par exemple selon une direction inclinée de 15 degrés à 90 degrés par rapport à la verticale, vers l'avant pour une face frontale avant.

Un compartiment avant 22 de rangement est aménagé dans le corps 20. Un bac intérieur non représenté sur les figures est monté dans le corps pour délimiter le compartiment 22, entre les faces latérales 21, la face transversale avant 28 et la paroi interne verticale 25. La face supérieure 28 du corps est découpée pour ménager un orifice 24 d'accès au compartiment 22 par le haut.

L'orifice 24 est donc délimité par une embouchure comportant un segment arrière 24A horizontal à l'extrémité supérieure de la paroi interne 25, vers l'avant par un segment curviligne 24B supérieur raccordé à chaque extrémité du segment arrière 24A et, à l'avant, un segment avant 24C recourbé vers le bas et raccordé à chacune de ses extrémités aux segments curvilignes 24B. Un rebord avant 38 sensiblement horizontal est formé sur la tranche de la face transversale avant 28, entre la surface externe de la face avant et le segment 24C avant de l'embouchure. De même, un rebord vertical est formé sur la tranche de la face supérieure 26, entre la surface externe de la face supérieure et les segments curviligne 24B de l'embouchure.

La console 10 comporte une poignée 27 sous forme d'arche posée sur la face supérieure 26. La poignée 27 est posée en saillie par rapport à la face supérieure, c'est à dire au dessus du niveau de la face supérieure 26 à proximité de la poignée, à l'arrière par rapport la paroi interne 25.

L'orifice 24 est muni d'un organe de fermeture du compartiment 22, en l'espèce un rideau 30 (figure 3). Le rideau 30 est intégré à la console en étant monté coulissant entre des glissières longitudinales de guidage 32.

Dans l'exemple représenté, au moins un segment curviligne des glissières 32 est en correspondance avec les segments curvilignes 24B de l'embouchure, au moins une partie de l'orifice 24 étant définie entre le segment curviligne des glissières 32. Le rideau 30 est prévu pour suivre le segment curviligne des glissières 32. La partie d'orifice 24 définie entre le segment curviligne des glissières 32 présente une portion qui s'étend vers le bas dans une région frontale de la console pour un accès aisé au compartiment par l'avant

Le rideau 30 est mobile entre une position d'accès et une position d'obturation où recouvre le compartiment 22. Il s'ouvre de l'arrière vers l'avant de la console. Une manette 40 est prévue pour son maniement manuel par un utilisateur. La manette 40 est intégrée à une lamelle du rideau, en saillie par rapport à une couche supérieure souple reliant les lamelles du rideau 30 et formant une feuille continue. Le rideau peut être constitué de lamelles reliées entre elles d'autres moyens qu'une couche souple. Il peut être constitué seulement par une feuille continue de rigidité appropriée.

Chaque glissière de guidage 32 présente une portion supérieure 34 (matérialisée par une flèche 35 à la figure 3) sensiblement en correspondance de l'orifice 24 et une portion inférieure 36 (matérialisée par une flèche 37 à la figure 3) située en dessous du niveau de l'extrémité inférieure 38 de l'orifice 24, c'est à dire en dessous du niveau du rebord 38.

Dans la position d'accès, le rideau est escamoté dans la console 10 (figure 2) et l'orifice 24 est complètement ouvert. Le rideau 30 est placé dans la portion inférieure 36 des glissières 32. La manette 40 est en appui sur le rebord 38.

Dans la position d'obturation, le rideau 30 est déployé en continu en correspondance de l'orifice 24. Le rideau 30 est placé dans la portion supérieure 34 des glissières 32.

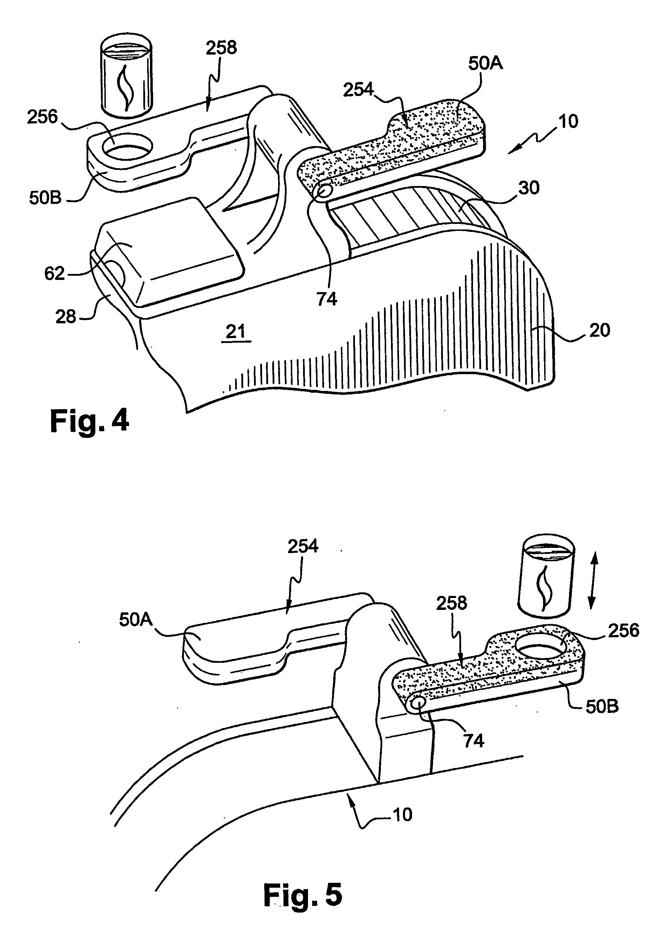

La console 10 comporte un accoudoir 50 intégré situé au dessus de la face supérieure. L'accoudoir peut être placé dans une première position d'utilisation selon un plan sensiblement horizontal au dessus du rideau, l'accoudoir étant superposé au moins partiellement au rideau, en couvrant au moins partiellement le rideau. L'accoudoir peut être placé dans au moins une autre position dans laquelle il dégage le rideau. L'accoudoir 50 est mobile à rotation de la première position horizontale avant d'utilisation telle que représenté sur les figures vers une position verticale (non représentée) ou vers une deuxième position horizontale arrière (figures 4 et 5). De la première position à la deuxième position, l'accoudoir effectue sensiblement une rotation à 180 degrés. Avantageusement, l'accoudoir 50 est distinct, donc indépendant de l'organe de fermeture 30, mais il peut, comme l'organe de fermeture, couvrir au moins partiellement l'orifice d'accès 24 au compartiment 22. Tout en 50 étant placé en correspondance d'au moins une portion de la face supérieure de la console 10, l'accoudoir et n'interdit pas l'accès au compartiment 22, en particulier par la portion de l'orifice située au niveau de la région frontale de la console. Avantageusement, dans la deuxième position, l'accoudoir est au moins partiellement superposé au moins à d'une de la région supérieure de la console ou de l'organe de fermeture.

Dans l'exemple représenté, l'accoudoir 50 présente une fente 156 longitudinale qui le divise en deux parties 50A, 50B adaptées à être utilisées par des usagers situés de chaque côté de la console 10. Chaque partie de l'accoudoir 50 est un bras longitudinal 50A pouvant tourner indépendamment de l'autre bras 50B.

Selon l'invention, l'accoudoir présente une surface repose bras 254 et un porte gobelet intégré 256 ménagé sur une surface complémentaire 258 de l'accoudoir 50. La surface repose bras 254 et la surface complémentaire 258 sont disposées sur des faces opposées de l'accoudoir, le porte gobelet 256 étant donc disposé sur une face de l'accoudoir opposée à la surface repose bras 254. Le porte gobelet 256 est défini au moins en partie par un évidement creusé dans l'accoudoir. Pour maintenir un gobelet ou une cannette, il peut à sa périphérie interne présenter des languettes radiales en matériau élastiques sensiblement tangentes à la surface complémentaire 258. Comme représenté, dans la première position horizontale avant d'utilisation, la surface repose bras 254 est situé sur le dessus du bras 50A de l'accoudoir 50. Dans la deuxième position horizontale arrière d'utilisation, le porte gobelet 256 est situé sur le dessus du bras 50B de l'accoudoir 50. Avantageusement, dans la première position, la surface repose bras 254 est prévue pour être utilisées par un passager d'un siège avant et dans la deuxième position, le porte gobelet 256 est prévu pour être utilisé par un passager d'un siège arrière. Avantageusement, un usager peut utiliser la surface repose bras 254 de l'un 50A des bras 50A, 50B pendant qu'un autre usager peut utiliser le porte gobelet 256 de l'autre 50B des bras 50A, 50B.

Dans l'exemple représenté, l'axe 74 de l'accoudoir 50 est situé environ au deux tiers de la longueur de la console 10, vers l'arrière. L'axe de l'accoudoir pourrait par exemple être situé environ à mi longueur de la console. De façon plus générale, l'axe est situé en position médiane de la console, c'est à dire sur le tiers central de la console, au bénéfice de la compacité de la console et de son ergonomie. Avantageusement, dans une position avant de la console 10, un porte gobelet 256 peut aussi être facilement utilisé par un usager d'un siège avant.

Dans l'exemple représenté, l'accoudoir 50 comporte une échancrure centrale 54 d'accès à l'orifice 24, à proximité de la poignée 27 sur laquelle est monté l'accoudoir 50.

L'échancrure 54 permet l'accès à l'orifice 24. Elle est délimitée par au moins un corps 152 de chaque bras de l'accoudoir et un pied 154 de raccordement à pivotement de l'accoudoir 50 sur la console, le corps étant situé à l'avant du pied et plus large que le pied.

L'arche formant la poignée 27 est ménagé dans un support 70 servant à la fixation de l'accoudoir 50. Sous l'arche, le support 70 présente un évidement 72 formant une portion de préhension de la poignée 27. La poignée est prévue pour être saisie par un usager pour manipuler la console selon les moyens de guidage en passant la main à travers la portion de préhension 72. Avantageusement, l'échancrure 54 dégage un accès à la portion de préhension 72.

Dans l'exemple représenté, le compartiment 22 est situé à l'avant de la console et la région frontale de la console où débouche l'orifice 24 est transversale, à l'avant de la console 10. La console comporte un compartiment arrière 60 avec son propre organe de fermeture, à savoir un couvercle 62 monté à rotation autour d'un axe situé à proximité de la poignée 27, en saillie par rapport à la surface supérieure 126. Le compartiment arrière 60 est destiné à un usage privilégié par un usager arrière.

Avantageusement, quelle que soit la position de l'accoudoir 50 placé sur la console 10, la console selon l'invention permet l'accès au contenu du compartiment 22. De plus, tout en pouvant accéder au contenu du compartiment, le maniement de la console est aisé pour tout usager d'un siège avant comme d'un siège arrière, quelle que soit la position de la console.

Avantageusement, un usager de la console selon l'invention peut accéder au contenu du compartiment en passant la main dans l'orifice vers le bas dans une région frontale de la console, le bras de l'usager étant incliné vers l'arrière pour un usager d'un siège avant voulant attraper un objet du compartiment quand la console est située en position arrière.

Avantageusement, un usager peut d'un seul geste libérer l'accès total au compartiment 22 et accéder au contenu du compartiment 22 en passant la main n'importe où dans l'orifice 24. De même, il peut d'un seul geste condamner complètement l'accès au contenu du compartiment 22. Bien évidemment, l'usager peut aussi positionner le rideau 30 dans diverses positions intermédiaire pour fermer partiellement l'orifice 24.

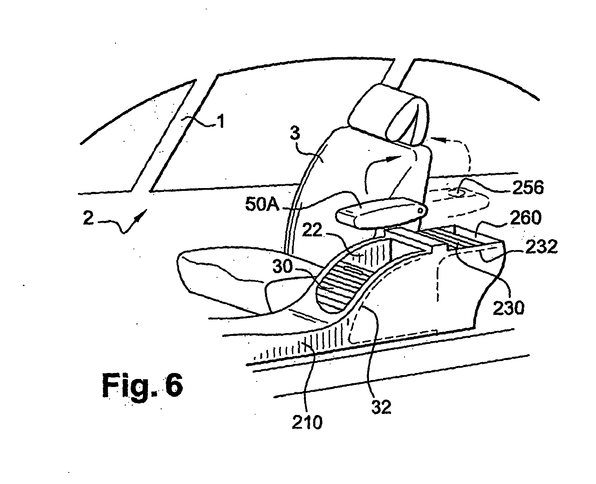

Dans une variante de réalisation de l'agencement selon l'invention (figure 6), chacune des deux parties de l'accoudoir 50 est monté pivotante sur un dossier d'un siège avant de l'habitacle. A la figure 6, seul l'un des sièges avant 3 et l'une des parties d'accoudoir 50A sont représentés, mais les parties formant bras d'accoudoir sont montées côte à côte entre les deux sièges avant du véhicule. La console 210 est une console fixe dont le compartiment arrière 260 comporte un rideau de fermeture 230 monté sur des glissière 232 représentées en trait pointillé. La partie d'accoudoir 50A est située au moins en partie au dessus du compartiment avant 22 quand elle est placée dans sa première position avant (représentée en trait plein à la figure 6) où la surface repose bras est sur le dessus de l'accoudoir, en fonction de la position du siège. On remarque que la partie d'accoudoir 50A est située au moins en partie au dessus du compartiment arrière 260 quand elle est placée dans sa deuxième position arrière (représentée en trait mixte à la figure 6) où la surface repose bras est sur le dessus de l'accoudoir.

Dans un autre exemple de réalisation non représenté, deux bras d'accoudoir sont respectivement montés sur deux sièges d'une rangée, et la console est mobile selon des moyens de guidage entre une position avant et une position arrière du véhicule. Le mouvement de la console est adapté à placer la console de sorte que l'accoudoir soit superposé avec la console, préférentiellement au moins quand l'accoudoir est dans la deuxième position.

Avantageusement, l'organe de fermeture 30, 230, 262 est adapté à couvrir le compartiment 22, 60, 260 au moins quand l'accoudoir dans la deuxième position, afin d'éviter que le contenu d'un gobelet risque se répandre dans le compartiment 22.

## Revendications

1. Agencement d'accoudoir pour véhicule (1), l'accoudoir (50) comportant une surface repose bras (254) et un porte gobelet intégré (256), la surface repose bras (254) et le porte gobelet (256) de l'accoudoir (50) sont disposés sur des faces substantiellement opposées de l'accoudoir, l'accoudoir est adapté pour pivoter d'une première position dans laquelle la surface repose bras est sur le dessus de l'accoudoir vers une deuxième position dans laquelle le porte gobelet intégré est sur le dessus de l'accoudoir, l'agencement comporte une console (10 ; 210) définissant un compartiment (22) accessible par un usager à travers un orifice (24) recouvrable par un organe de fermeture (30) intégré à la console, **caractérisé en ce que** l'accoudoir est indépendant de l'organe de fermeture et **en ce que**, dans la première position, l'accoudoir est au moins partiellement superposé à l'organe de fermeture (30).

2. Agencement selon la revendication 1, **caractérisé en ce que** dans la deuxième position, l'accoudoir (50) est au moins partiellement superposé au moins à l'un de la région supérieure de la console ou de l'organe de fermeture (30, 62 ; 262).

3. Agencement selon l'une quelconque des revendications 1 à 2, **caractérisé en ce que** dans la première position, la surface repose bras (254) est prévue pour être utilisées par un usager d'un siège avant (3) et **en ce que** dans la deuxième position, le porte gobelet (256) est prévu pour être utilisé par un usager d'un siège arrière (5).

4. Agencement selon la revendication 3, la console (10) étant mobile selon des moyens de guidage (11, 12, 13) entre une position avant et une position arrière du véhicule (1), **caractérisé en ce que** le mouvement de la console (10) est adapté à placer la console de sorte que l'accoudoir (50) soit superposé avec la console, préférentiellement au moins quand l'accoudoir (50) est dans la deuxième position.

5. Agencement selon l'une quelconque des revendications précédentes, **caractérisé en ce que** l'accoudoir (50, 50A, 50B) est monté pivotant sur un siège (3) d'une rangée de siège du véhicule (1), préférentiellement un siège avant du véhicule, préférentiellement sur un dossier du siège.

6. Agencement selon l'une quelconque des revendications 1 à 3, **caractérisé en ce que** l'accoudoir (50, 50A, 50B) est monté pivotant sur la console (10), l'agencement comportant préférentiellement un accoudoir (50, 50A, 50B) en deux bras (50A, 50B) placés sensiblement l'un à côté de l'autre, les deux bras (50A, 50B) étant préférentiellement montés pivotant indépendamment l'un de l'autre dans leur première ou deuxième position, les bras (50A, 50B) étant préférentiellement est montés pivotant selon un axe (74) placé en position sensiblement médiane de la console.

7. Agencement selon l'une quelconque des revendications précédentes, **caractérisé en ce que** l'accoudoir (50, 50A, 50B) est monté pivotant sensiblement à l'une de ses extrémités, l'accoudoir étant préférentiellement monté pivotant sensiblement à 180 degrés, le porte gobelet (256) étant préférentiellement placé à une autre extrémité de l'accoudoir.

8. Agencement selon l'une quelconque des revendications précédentes, **caractérisé en ce que** dans la première position, l'accoudoir (50, 50A, 50B) s'étend sensiblement vers l'avant du véhicule (1) et **en ce que** dans la deuxième position, l'accoudoir s'étend sensiblement vers l'arrière du véhicule, l'accoudoir étant sensiblement horizontal.

9. Agencement selon l'une quelconque des revendications précédentes, **caractérisé en ce que** le porte gobelet (256) est défini au moins en partie par un évidement creusé dans l'accoudoir (50, 50A, 50B).

10. Véhicule (1) comportant un agencement d'accoudoir selon l'une quelconque des revendications précédentes, l'élément de fermeture comprenant un rideau coulissant (30 ; 230).

## Claims

1. Armrest system for a motor vehicle (1), the armrest (50) comprising an armrest surface (254) and an integrated cup holder (256), the armrest surface (254) and the cup holder (256) of the armrest (50) are positioned on essentially opposite faces of the armrest, the armrest is designed to pivot from a first position in which the armrest surface is at the top of the armrest to a second position in which the integrated cup holder is at the top of the armrest, the system comprises a console (10; 210) defining a compartment (22) which a user can access via an opening (24) which can be covered by a closing means (30) integrated in the console, **characterized in that** the armrest is independent of the closing means and **in that**, in the first position, the armrest is at least partially superposed on the closing means (30).

2. System according to Claim 1, **characterized in that** in the second position, the armrest (50) is at least partially superposed at least on either the upper region of the console or the closing means (30, 62; 262).

3. System according to either of Claims 1 and 2, **characterized in that** in the first position, the armrest surface (254) is intended to be used by a user in a front seat (3) and **in that**, in the second position, the cup holder (256) is intended to be used by a user in a back seat (5).

4. System according to Claim 3, in which the console (10) can move along guide means (11, 12, 13) between a front position and a rear position in the vehicle (1), **characterized in that** the movement of the console (10) is designed to position the console in such a way that the armrest (50) is superposed on the console, preferably at least when the armrest (50) is in the second position.

5. System according to any one of the preceding claims, **characterized in that** the armrest (50, 50A, 50B) is mounted so that it can pivot on a seat (3) of a row of seats of the vehicle (1), preferably a front seat of the vehicle, preferably on a backrest of the seat.

6. System according to any one of Claims 1 to 3, **characterized in that** the armrest (50, 50A, 50B) is mounted so that it can pivot on the console (10), the system preferably comprising an armrest (50, 50A, 50B) with two arms (50A, 50B) positioned essentially next to one another, the two arms (50A, 50B) preferably being mounted so as to pivot independently of one another in their first or second position, the arms (50A, 50B) preferably being mounted so as to pivot about an axis (74) located essentially in the middle part of the console.

7. System according to any one of the preceding claims, **characterized in that** the armrest (50, 50A, 50B) is mounted so as to pivot essentially at one of its ends, the armrest preferably being mounted so as to pivot by essentially 180 degrees, the cup holder (256) preferably being positioned at another end of the armrest.

8. System according to any one of the preceding claims, **characterized in that** in the first position, the armrest (50, 50A, 50B) extends essentially towards the front of the vehicle (1) and **in that** in the second position, the armrest extends essentially towards the rear of the vehicle, the armrest being essentially horizontal.

9. System according to any one of the preceding claims, **characterized in that** the cup holder (256) is defined at least partially by a hollow made in the armrest (50, 50A, 50B).

10. Motor vehicle (1) comprising an armrest system according to any one of the preceding claims, the closing element comprising a shutter (30; 230).

## Patentansprüche

1. Armlehnenanordnung für ein Fahrzeug (1), wobei die Armlehne (50) eine Armstützenfläche (254) und einen integrierten Becherhalter (256) aufweist, wobei die Armstützenfläche (254) und der Becherhalter (256) der Armlehne (50) auf einander im Wesentlichen gegenüberliegenden Flächen der Armlehne angeordnet sind, wobei die Armlehne ausgelegt ist, um von einer ersten Position, in der die Armstützenfläche sich auf der Oberseite der Armlehne befindet, in eine zweite Position zu schwenken, in der sich der integrierte Becherhalter auf der Oberseite der Armlehne befindet, wobei die Anordnung eine Konsole (10; 210) aufweist, die ein Abteil (22) definiert, das für einen Benutzer durch eine Öffnung (24) zugänglich ist, die von einem in die Konsole integrierten Verschlussorgan (30) verdeckt werden kann, **dadurch gekennzeichnet, dass** die Armlehne vom Verschlussorgan unabhängig ist, und dass die Armlehne in der ersten Position das Verschlussorgan (30) zumindest teilweise überlappt.

2. Anordnung nach Anspruch 1, **dadurch gekennzeichnet, dass** die Armlehne (50) in der zweiten Position entweder den oberen Bereich der Konsole oder das Verschlussorgan (30, 62; 262) zumindest teilweise überlappt.

3. Anordnung nach einem der Ansprüche 1 bis 2, **dadurch gekennzeichnet, dass** die Armstützenfläche (254) in der ersten Position vorgesehen ist, um von einem Benutzer eines Vordersitzes (3) benutzt zu werden, und dass der Becherhalter (256) in der zweiten Position vorgesehen ist, um von einem Benutzer eines Rücksitzes (5) benutzt zu werden.

4. Anordnung nach Anspruch 3, wobei die Konsole (10) entlang von Führungsmitteln (11, 12, 13) zwischen einer vorderen Position und einer hinteren Position im Fahrzeug (1) beweglich ist, **dadurch gekennzeichnet, dass** die Bewegung der Konsole (10) ausgelegt ist, um die Konsole so anzuordnen, dass die Armlehne (50) die Konsole vorzugsweise mindestens dann überlappt, wenn die Armlehne (50) in der zweiten Position ist.

5. Anordnung nach einem der vorhergehenden Ansprüche, **dadurch gekennzeichnet, dass** die Armlehne (50, 50A, 50B) an einen Sitz (3) einer Sitzreihe des Fahrzeugs (1), vorzugsweise einen Vordersitz, vorzugsweise an einer Rückenlehne des Sitzes, schwenkbar montiert ist.

6. Anordnung nach einem der Ansprüche 1 bis 3, **dadurch gekennzeichnet, dass** die Armlehne (50, 50A, 50B) schwenkbar auf die Konsole (10) montiert ist, wobei die Anordnung vorzugsweise eine aus zwei Armen (50A, 50B) bestehende Armlehne (50, 50A, 50B) aufweist, die im Wesentlichen nebeneinander angeordnet sind, wobei die beiden Arme (50A, 50B) vorzugsweise unabhängig voneinander in ihre erste oder zweite Position schwenkbar angeordnet sind, wobei die Arme (50A, 50B) vorzugsweise um eine Achse (74) schwenkbar angeordnet sind, die sich in einer im Wesentlichen mittleren Position der Konsole befindet.

7. Anordnung nach einem der vorhergehenden Ansprüche, **dadurch gekennzeichnet, dass** die Armlehne (50, 50A, 50B) im Wesentlichen an einem ihrer Enden schwenkbar montiert ist, wobei die Armlehne vorzugsweise im Wesentlichen um 180 Grad schwenkbar montiert ist, wobei sich der Becherhalter (256) vorzugsweise an einem anderen Ende der Armlehne befindet.

8. Anordnung nach einem der vorhergehenden Ansprüche, **dadurch gekennzeichnet, dass** die Armlehne (50, 50A, 50B) sich in der ersten Position im Wesentlichen zur Vorderseite des Fahrzeugs (1) erstreckt, und dass die Armlehne sich in der zweiten Position im Wesentlichen zur Rückseite des Fahrzeugs erstreckt, wobei die Armlehne im Wesentlichen waagerecht ist.

9. Anordnung nach einem der vorhergehenden Ansprüche, **dadurch gekennzeichnet, dass** der Becherhalter (256) zumindest zum Teil durch eine Aussparung definiert wird, die in der Armlehne (50, 50A, 50B) ausgehöhlt ist.

10. Fahrzeug (1), das eine Anordnung nach einem der vorhergehenden Ansprüche enthält, wobei das Verschlusselement eine gleitende Klappe (30; 230) aufweist.
